Europäisches Patentamt

European Patent Office

Office européen des brevets

(19)

(11) Publication number: **0 055 082**
**A2**

(12)

# EUROPEAN PATENT APPLICATION

(21) Application number: **81305925.0**

(22) Date of filing: **17.12.81**

(51) Int. Cl.³: **B 29 C 17/03**
**// B65D75/36**

---

(30) Priority: **18.12.80 DE 3047812**

(43) Date of publication of application: **30.06.82**
**Bulletin 82/26**

(84) Designated Contracting States: **FR GB IT NL**

(71) Applicant: **The British Petroleum Company p.l.c.,**
**Britannic House Moor Lane, London EC2Y 9BU (GB)**

(72) Inventor: **Dirr, Ludwig Wilhelm, Theodor Koerner**
**Strasse 4, D-8033 Planegg (DE)**
Inventor: **Kochanek, Eberhard, Haus Nr. 18,**
**D-8131 Landstetten (DE)**
Inventor: **Taube, Guenter, Lipperheidestrasse 23,**
**D-8000 Muenchen 50 (DE)**

(74) Representative: **Ryan, Edward Terrence et al, BP**
**INTERNATIONAL LIMITED Patents and Licensing**
**Division Chertsey Road, Sunbury-on-Thames Middlesex,**
**TW16 7LN (GB)**

---

(54) **Thermoformed articles.**

(57) Thermoforming process in which different parts of sheet to be thermoformed are heated to different extents is particularly useful for a combined thermoforming and heat sealing process using common heating step. Different degrees of heating may be obtained using a heat insulating mask.

EP 0 055 082 A2

1

## THERMOFORMED ARTICLES

The present invention relates to articles comprising thermoformed sheet.

It is well known to make articles by thermoforming sheets of material, usually various thermoplastics by heating the sheet and then causing it to take up the shape of a mould either by vacuum or by gas pressure.

It is sometimes desirable to regulate the thickness of different areas of the thermo-formed sheet. This may be because it is desired to vary the degree of drawing of different parts of the sheet so as to provide pockets in the sheet separated from one another, or to strengthen certain areas of the sheet.

It is well known to heat seal sheets of various thermoplastics to themselves or to other materials. In particular it is known to heat seal thermoplastics sheets to materials such as cardboard.

We have found that when heat sealing and thermoforming steps are combined using a common heating step, the time required for heating to carry out the thermoforming process is undesirably long if a relatively low temperature sufficient for heat sealing is used. If however a higher temperature is used in order to increase the rate of production, we have found that a line of weakness similar to a tear line is formed along the line of contact of the sheet and the material to which it is sealed. Such a line of weakness is often undesirable. this is a particular problem in the production of so-called blister boards or blister packs in which a thermoformed trough heat sealed to a frame of e.g. cardboard is formed using a single heating step.

We have now found a method of regulating the thickness of differing regions of thermoformed sheet which does not require the expense of constructing differently shaped moulds and which helps to reduce the problem of tear line in heat-sealed articles mentioned above. According to the present invention the process for the production of an article comprising a thermoformed sheet characterised in that during a single heating step different parts of the sheet which are to be thermally fabricated are subjected to different degrees of heating.

It is known to hold thermoformable sheet in clamping means during the heating step. However the parts which are held by the clamping means are parts of the sheet which it is desired to leave unchanged. Thus although parts of the sheet in the vicinity of the clamping means may not be heated to the same extent as other parts, the parts of the sheet held by such clamping means are not parts which it is desired to fabricate.

In the present invention the parts which are to be thermally fabricated are parts where a change as a result of heating is required e.g. thermoforming and heat sealing.

The heat source used for the heating step is preferably maintained at a substantially uniform temperature over all the area of the heat source which heats the thermoformable sheet. The different degrees of heating of different parts of the sheet is then preferably obtained by means of a heat insulating mask between the heat source and the thermoformable sheet during the heating step.

The process of the present invention is particularly advantageous in the production of articles in which a thermoformed sheet is heat sealed to another part of the article. In the production of such articles in accordance with the present invention the heat-sealing and thermoforming steps employ a common heating step and the parts of the sheet in which heat sealing takes place are subjected to a lesser degree of heating than the parts in which thermoforming takes place.

In a further version of the process of the present invention a heat sealing step is combined with a thermoforming step in which the

2

thickness of the sheet in the thermoformed part is regulated by subjecting different regions of the sheet in the part which is to be thermoformed to different degrees of heating. This may enable individual pockets to be formed in the thermoformed part without the need for special moulds.

The means for heating the thermoformable sheet may be by means of so-called contact heating in which a heated plate is brought into contact or close proximity with the thermoformable sheet. It will be realised that when a heat-insulating mask is interposed between the heated plate and the thermoformable sheet the heated plate will not be in direct contact with the sheet, but if it is in sufficiently close proximity the heating can be regarded as contact heating.

The process of the present invention is particularly suitable for the production of blister packs comprising a frame to which is heat sealed a thermoformed sheet. Such blister packs are well known in the packaging art.

The frame may for example be cardboard and the sheet may be a transparent thermoplastic.

It should be noted that in this specification "sheet" is used as an equivalent for the German term "Folie" and includes film where this is of such a thickness that it can be thermoformed.

It is advantageous if the temperature of the contact heating surface in the parts of the sheet where the sealing is done is 100 to 150°C, and 150 to 300°C in those where thermoforming is carried out. These temperatures are far enough apart to make it possible to achieve the differential heating of the sheet without any problems.

The process of the present invention is particularly suitable for the production of thermoformed articles by deep drawing by vacuum into a female mould.

In addition the invention relates to a device for carrying out the process described above and having a trough-shaped female mould and a contact heating surface and is characterised by the fact that in order to achieve the different degrees of heating of the thermoformable sheet heat insulating material is applied to a heating plate having a constant temperature.

This device according to the Invention has the advantage that it still uses all the elements of a traditional heating or drawing device for blister boards and layers of heat insulating material merely have to be applied to this heating plate. By this means the production cost for a device according to the invention can be kept low.

In a preferred form of embodiment of the device according to the invention the heat insulating material has the form of a heat insulating mask for holding the blister board frame and the sheet to be shaped under tension.

A further design of a device according to the invention consists in the fact that the heat insulating mask is subdivided into sections of differing heat insulating capacity, the sections of the heat insulating mask lying opposite the blister board frame having a high heat insulating capacity. As a result of this design of a device according to the invention a differential heating of the sheet to be shaped as between one part and another is achieved, which is of particular advantage if the sheet has to be shaped to a varying extent as between one part and another, which would be the case, say, if constrictions or bars are to be formed in the convex form of the blister board.

In a preferred form of embodiment of the device according to the invention the heat insulating mask is a multi-layer composite frame and the differing heat insulating capacity is achieved by individual sections by using materials of differing heat conductivity. This layered structure of the heat insulating mask is advantageous in that it means that complete layers can be provided with the same material and which act as supporting frames and yet the differential heat insulating capacity of the heat insulating mask is achieved section-wise. Finally, as a result of the layered structure, even the surface layer turned towards the sheet may consist in its entirety of the same material, which may be of significance in relation to the surface quality of the blister board to be produced.

A further preferred form of embodiment of the device according to the invention is characterised by the fact that the heat insulating mask is positioned on the heating plate so as to be capable of being separated from the heating plate by a limited distance. In this way it is possible after the working operation, during which the heat insulating mask is pressed on to the sheet by the heating plate, for it to be separated from the heating plate, thus making it possible to avoid a gradual heating up of the heat insulating mask to the temperature of the heating place. If the working surface of the heating plate is pointing downwards, the separation of the heat insulating mask from the heating plate can be accomplished by the heat insulating mask, as a result of its own weight, dropping away from the heating plate within the path length permitted by suitable stops. In another preferred mode of embodiment of the invention compression springs are arranged between the heat insulating mask and the heating plate which force the mask away from the heating plate even when its own weight cannot produce any effect.

In preferred forms of embodiment of the heat insulating mask these have on their side turned towards the sheet a surface coated with PTFE (PTFE = polytetrafluorethylene), thus avoiding undesired adhesion of the sheets. The preferred heat insulating material used for the heat insulating mask is a glass or PTFE fabric.

An example of embodiment of the process according to the invention and a device for carrying out the process will now be explained with reference to the attached drawing:

In the drawing:

Fig 1    shows a diagrammatic cross-section through a production device for a blister board,

Fig 2    shows details from the device according to Fig 1, enlarged in oblique view and partially exploded.

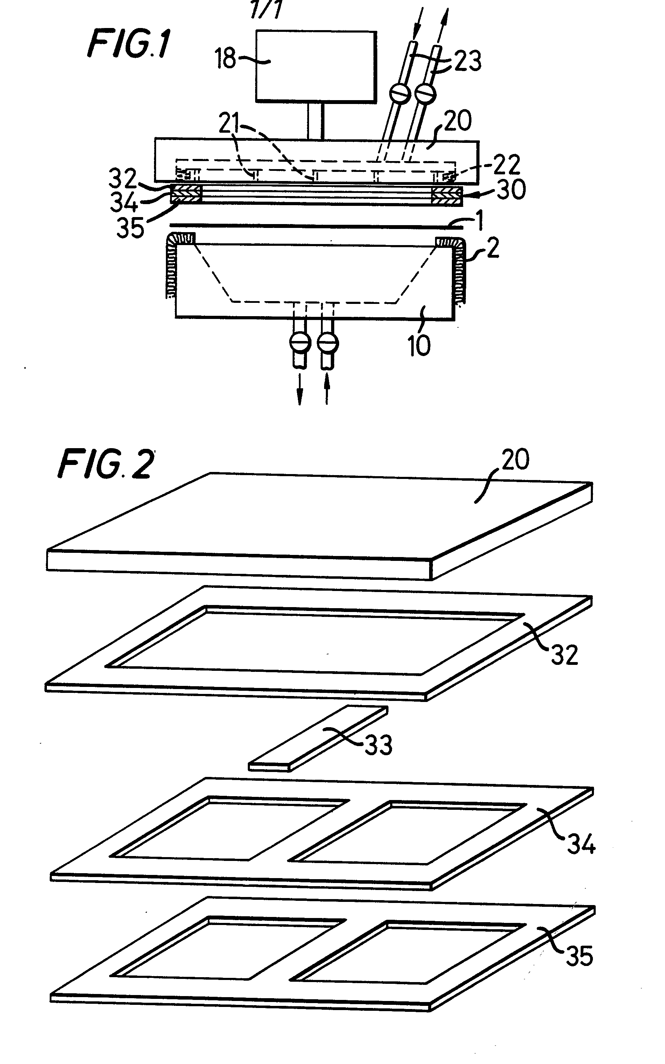

The device represented in cross-section in Fig 1 has a trough-shaped female mould 10, into which a plastic sheet 1 is to be drawn either by vacuum at the sides of the female mould 10 or by overpressure on the top of the sheet 1 into the predetermined shape of the female mould. A blister board frame 2 is applied to the border of the female mould 10, this frame consisting of corrugated cardboard. The top part of the device consists essentially of a heating plate 20

5

which can be moved vertically and which is movable upwards and downwards via a pressure piston of a hydraulic lifting device, which is designated as a whole by 18. In the heating plate 20 pneumatic lines 21 are provided which lead out to the underside of the heating plate 20 turned towards the sheet 1 and which communicate via a manifold with suitable pressure supply lines 23 on the top of the heating plate 20. The supply lines 23 can be worked as vacuum or overpressure lines.

A heat insulating mask 30 lies against the underside of the heating plate 20. In the example of embodiment represented the heat insulating mask 30 is a multi-layer composite unit comprising the layers 32, 34 and 35. The heat insulating mask 30 is mounted on the heating plate 20 in such a way as to be capable of being forced away from it by means of compression springs 22 and is secured against falling by suitable stops.

In Fig 2 the heating plate 20 is shown in simplified form and the heat insulating mask 30 as an exploded diagram. As already mentioned above, the heat insulating mask 30 consists essentially of the three layers 32, 34 and 35. The first layer 32 is a more or less rectangular frame, which consists of material with a poor heat conductivity such as for example glass fabric or PTFE fabric. It has the contour of the blister board frame 2. A plate 33 fits into the frame 32 as a crossbar, which consists of material with a high heat conductivity, preferably metal. The second layer of the heat insulating mask 30 consists of a frame 34 which has the contour of the frame 32 as completed by the plate 33. The frame 34 likewise consists of heat-insulating material. The third layer 35 of the heat insulating mask 30 is a frame consisting entirely of PTFE or coated with PTFE on its underside, and having the same contour as layer 34. The three layers 32, 34, 35 are joined by adhesion or mechanical connecting means. The heat insulating mask thus resulting and having a spectacle-like contour is suitable for the production of a blister board which, in accordance with the openings in the heat insulating mask 30 has two convex markedly shaped zones and between these a bar or ridge the shape of which is only suggested. As a result of the

6

triple insulating layer which the heat insulating mask 30 has all along the blister board frame 2, at constant temperature of the heating plate 20 there occurs a very much lower temperature of the heating plate 20 between the heat insulating mask 30 and the sheet 1 than on the free surface of the heating plate 20.

The production of the blister board by the device described above takes place in the following manner: first of all, with the device open, the blister board frame 2 is laid on the female mould 10 and the plane sheet 1 is laid on this. After this the heating plate 20 is moved downwards by the lifting device 18 until the heat insulating mask 30 comes to lie on the sheet 1 and the latter is clamped together with the blister board frame against the female mould 10. The sheet is then heated by the heating plate 20, the sheet 1 being sucked on to the heating plate 20 either by overpressure in the cavity of the female mould 10 or by vacuum in the pneumatic lines 21. Once the heating is removed, the sheet 1 is drawn either by overpressure in the pneumatic lines 21 or by vacuum in the cavity of the female mould 10 into the contour of the said mould. The sealing of the sheet 1 to the blister board frame 2 takes place during the heating of the heating plate 20 or else, if the latter was already heated prior to clamping the sheet, during the thermoforming. After the thermoforming the heating plate 20 is moved upwards and the finished blister board can be removed from the female mould 10 or be ejected by automatic ejectors. When the heating plate 20 moves upwards the heat insulating mask 30 is automatically released from it.

0055082

Claims:

1. A process for the production of an article comprising a thermoformed sheet wherein a thermoformable sheet is subjected to a thermoforming step
characterised in that
during a single heating step different parts of the sheet which are to be thermally fabricated are subjected to different degrees of heating.

2. A process according to Claim 1 wherein the heat source is maintained at a substantially uniform temperature over all the area of the heat source which heats the thermoformable sheet and there is a heat insulating mask between the heat source and the thermoformable sheet during the heating step.

3. A process according to either one of claims 1 or 2 for the production of an article in which a thermoformed sheet is heat-sealed to another part of the article characterised in that the heat sealing and thermoforming steps employ a common heating step and the parts of the sheet in which heat sealing takes place are subjected to a lower temperature than the parts in which thermoforming takes place.

4. A process according to any one of the preceding claims characterised in that the thickness of the sheet in the thermoformed part is regulated by subjecting different regions of the sheet in the part which is to be thermoformed to different degrees of heating.

5. A process according to any one of the preceding claims wherein the heating is by means of contact heating.

6. A process according to any one of the preceding claims wherein the article is a blister pack comprising a frame to which is heat sealed a thermoformed sheet.

7. A process according to Claim 6 wherein the frame is cardboard.

8

8. A process according to any one of the preceding claims wherein the sheet is a transparent thermoplastic.

9. A process according to any one of the preceding claims characterised in that the temperature of the film in the region which is heat sealed is 100°C to 150°C and in the region where thermoforming is carried out it is 150 to 300°C.

10. A device for carrying out the process according to Claims 1 to 9, with a trough-shaped female mould and a contact heating surface, characterised by the fact that in order to achieve a different degrees of heating of the sheet, heat insulation material is applied to a heating plate having a constant temperature.

11. A device according to Claim 10, characterised by the fact that the heat insulation material has the form of a heat insulating mask (30) clamping the blister board frame and the sheet taut.

12. A device according to Claim 11, characterised by the fact that the heat insulating mask, (30) is subdivided into sections of differing heat insulating capacity, the sections lying opposite the blister board frame (2) having a high heat insulating capacity.

13. A device in according to claim 12, characterised by the fact that the heat insulating mask (30) is a multi-layer composite frame and the differential heat insulating capacity in the individual sections is achieved by using materials of a differing heat conductivity in individual layers (32, 34, 35).

14. A device according to claims 10 to 13 characterised by the fact that the heat insulating mask (30) is mounted on the heating plate (20) in such a way as to be separated from the latter by a limited distance when the heating plate is not in contact with the sheet.

15. A device according to Claim 14, characterised by the fact that compression springs (22) are arranged between the heat insulating mask (30) and the heating plate (20).

16. A device according to Claims 11 to 15, characterised by the fact that the heat insulating mask (30) has on its side turned towards the sheet (1) a surface coated with PTFE.

17. A device according to Claims 11 to 15, characterised by the fact that the heat-insulating material used for the heat insulating mask (30) is glass or PTFE fabric.

9

0055082

**FIG.1**

**FIG.2**